(19) Europäisches Patentamt
European Patent Office
Office européen des brevets

(11) **EP 4 130 132 A1**

(12) **EUROPEAN PATENT APPLICATION**
published in accordance with Art. 153(4) EPC

(43) Date of publication:
**08.02.2023 Bulletin 2023/06**

(21) Application number: **21780363.4**

(22) Date of filing: **29.03.2021**

(51) International Patent Classification (IPC):
*C08K 5/5415* (2000.01)  *C08L 19/00* (1974.07)
*C08L 83/07* (1985.01)  *C08K 3/013* (2018.01)

(52) Cooperative Patent Classification (CPC):
**C08K 3/013; C08K 5/5415; C08L 19/00;
C08L 83/04**

(86) International application number:
**PCT/JP2021/013422**

(87) International publication number:
**WO 2021/200879 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2020 JP 2020061210**

(71) Applicant: **Sekisui Polymatech Co., Ltd.
Saitama-city, Saitama 338-0837 (JP)**

(72) Inventors:
• **UMETANI, Hiroshi
Saitama-city, Saitama 338-0837 (JP)**
• **HIKITA, Atsushi
Saitama-city, Saitama 338-0837 (JP)**

(74) Representative: **Ter Meer Steinmeister & Partner
Patentanwälte mbB
Nymphenburger Straße 4
80335 München (DE)**

(54) **SILICONE COMPOSITION AND METHOD FOR MANUFACTURING SILICONE COMPOSITION**

(57)    The present invention is a silicone composition comprising (A) a liquid silicone compound, (B) a silicone rubber lump, and (C) a liquid compound to swell the silicone rubber lump (B), and a method for manufacturing the silicone composition. According to the present invention, there can be provided the silicone composition that can form a cured body in which a silicone rubber lump is well dispersed in a matrix resin, and the method for manufacturing the silicone composition.

EP 4 130 132 A1

**Description**

Technical Field

The present invention relates to a silicone composition and a method for manufacturing a silicone composition.

Background Art

In electronic devices such as computers, automobile parts and cell phones, cooling parts such as heat sinks are generally used in order to dissipate heat from by heat-generating elements such as semiconductor elements and mechanical parts. It is known that for the purpose of raising the heat-transfer efficiency to cooling parts, a thermally conductive sheet containing a thermally conductive filler blended therein is disposed between a heat-generating element and a heat dissipation element.

The thermally conductive sheet is usually compressed when disposed in electronic device interiors for use therein, and thus requires high softness. As a matrix resin of the thermally conductive sheet, a silicone rubber is suitably used because the silicone rubber has high softness and can be filled with a large amount of a thermally conductive filler.

Reutilization (recycling) of silicone rubber is difficult particularly in the case of having a crosslinked structure, for example, and it is difficult not only to reutilize products thereof but also to reutilize burrs and the like outside the products generated in manufacture.

Conceivable examples of methods for reutilizing silicone rubber include a method involving decomposing the silicone rubber and a method involving use of a solvent to separate components. However, practical application thereof is difficult because these need corresponding manpower and cost. Alternatively, there is conceivably a method of using the silicone rubber as a fuel in thermal power generation. However, in the case of a silicone rubber containing a filler such as a thermally conductive filler, the proportion of the organic material correspondingly is low, and therefore the efficiency as the fuel is low. In particular, when the filler is a hydroxide, the filler acts endothermically, and thus the silicone rubber is not suitable for use as the fuel.

As described above, reutilization of a silicone rubber once manufactured is difficult, and in particular, if there is a technology that enables reutilization of a silicone rubber blended with a filler such as a thermally conductive filler, such a technology has high technical value.

Patent Literature 1 describes a technology in which a silicone rubber (silicone resin cured material) is ground and utilized as one component of a heat dissipation member. Specifically, the Patent Literature describes an invention related to the heat dissipation member obtained by molding and curing a mixture of a ground material of a silicone resin cured material containing a thermally conductive filler and an uncured silicone resin containing or not containing a thermally conductive filler.

Citation List

Patent Literature

PTL1: JP 2004-363272 A

Summary of Invention

Technical Problem

However, when manufacturing the heat dissipation member by kneading a ground material of a silicone rubber (silicone resin cured material) as it is with an uncured silicone resin as in Patent Literature 1, the silicone rubber ground material has poor dispersibility in a matrix resin, and hence, the resulting heat dissipation member is poor in physical properties such as mechanical strength in some cases.

From the above, an object of the present invention is to provide a silicone composition that can form a cured body in which a silicone rubber ground material (silicone rubber lump) is well dispersed in a matrix resin, and a method for manufacturing the silicone composition.

Solution to Problem

As a result of exhaustive studies, the present inventors have found that the above problem can be solved by use of a silicone composition comprising (A) a liquid silicone compound, (B) a silicone rubber lump and (C) a liquid compound to swell the (B) silicone rubber lump; and this finding has led to the completion of the present invention.

The present invention provides the following [1] to [11].

[1] A silicone composition, comprising (A) a liquid silicone compound, (B) a silicone rubber lump, and (C) a liquid compound to swell the silicone rubber lump (B).

[2] The silicone composition according to the above [1], wherein the liquid silicone compound (A) is an addition reaction-type organopolysiloxane.

[3] The silicone composition according to the above [1] or [2], wherein the liquid compound (C) is at least one selected from the group consisting of alkoxysilane compounds, alkoxysiloxane compounds, aliphatic hydrocarbon solvents, aromatic solvents, silicone oils and silazanes.

[4] The silicone composition according to any one of the above [1] to [3], wherein the liquid compound (C) is an alkylalkoxysilane compound having an alkyl group having 4 or more carbon atoms bonded to a silicon atom.

[5] The silicone composition according to any one of the above [1] to [4], wherein the silicone rubber lump (B) comprises at least one filler selected from thermally conductive fillers and electroconductive fillers.

[6] The silicone composition according to any one of the above [1] to [5], wherein the silicone rubber lump (B) is contained is swollen with the liquid compound (C).

[7] The silicone composition according to any one of the above [1] to [6], further comprising (D) at least one filler selected from thermally conductive fillers and electroconductive fillers.

[8] A cured body of a silicone composition according to any one of the above [1] to [7].

[9] A method for manufacturing a silicone composition comprising (A) a liquid silicone compound, (B) a silicone rubber lump and (C) a liquid compound to swell the silicone rubber lump (B), the method comprising a step (1) of swelling the silicone rubber lump (B) with the liquid compound (C).

[10] The method for manufacturing a silicone composition according to the above [9], comprising the step (1) of swelling the silicone rubber lump (B) with the liquid compound (C), and a step (2) of mixing the swollen silicone rubber lump with the liquid silicone compound (A).

[11] A method for manufacturing a cured body of a silicone composition, the method comprising manufacturing the silicone composition by the method according to the above [9] or [10] and then curing the silicone composition.

Advantageous Effects of Invention

According to the present invention, there can be provided a silicone composition that can form a cured body good in the dispersion state of a silicone rubber lump (silicone rubber ground material) in a matrix resin, a cured body thereof, and methods for manufacturing these.

Brief Description of Drawings

[Fig. 1] Fig. 1 is a diagram illustrating a measuring device to measure the thermal conductivity.
[Fig. 2] Fig. 2 is a scanning electron microscopic photograph of a cured body prepared in Example 1.
[Fig. 3] Fig. 3 is a scanning electron microscopic photograph of a cured body prepared in Comparative Example 1.

Description of Embodiments

[Silicone composition]

The silicone composition according to the present invention comprises (A) a liquid silicone compound, (B) a silicone rubber lump, and (C) a liquid compound to swell the silicone rubber lump (B).

In the silicone composition according to the present invention, the silicone rubber lump (B) can be well dispersed in a matrix resin to be formed by curing the liquid silicone compound (A).

Although the reason therefor is not clear, the following is conceivable: since the silicone rubber lump (B) is swollen with the liquid compound (C), it is easy for the liquid silicone compound (A) to enter the inside of the lump (for example, the inside of a network structure in which molecular chains are crosslinked) when the (C) liquid compound and the silicone rubber lump (B) are kneaded, and a good mixing state can be thus formed. It is presumed that by curing the liquid silicone compound (A) in this state, the silicone rubber lump is well dispersed in a micronized state in the matrix resin.

<(A) liquid silicone compound>

The silicone composition according to the present invention comprises the liquid silicone compound (A). The liquid silicone compound (A) is a compound capable of being cured and forming the matrix resin.

Examples of the liquid silicone compound (A) include condensation reaction-type organopolysiloxanes and addition reaction-type organopolysiloxanes. Among these, an addition reaction-type organopolysiloxane is preferable for the following reasons: (D) a thermally conductive filler described later is easily filled in a large amount, and the curing temperature can easily be regulated by a catalyst and the like. The addition reaction-type organopolysiloxane preferably contains an alkenyl group-containing organopolysiloxane and a hydrogenorganopolysiloxane, in view of ease in filling a large amount of a thermally conductive filler. Herein, "liquid" refers to being liquid at 23°C and 1 atm.

The liquid silicone compound (A) after being cured has a hardness, in terms of E hardness, of preferably 90 or lower, more preferably 50 or lower and still more preferably 20 or lower. The E hardness is a value measured by a type E durometer according to JIS K6253.

The content of the liquid silicone compound (A) is not especially limited, but is for example, 1 to 50% by volume and preferably 3 to 30% by volume, based on the total amount of the silicone composition.

<(B) Silicone rubber lump>

The silicone composition according to the present invention comprises the silicone rubber lump (B). In the silicone composition, the silicone rubber lump contained is swollen with a liquid compound described later, whereby the silicone rubber lump exhibits good dispersibility in a cured body of the silicone composition.

The silicone rubber lump (B) is a ground material of a silicone rubber manufactured by a known method. The silicone rubber is not especially limited as long as it is an organosilicon polymer having siloxane bonds (-Si-O-) as its main chain. The silicone rubber preferably includes cured bodies of condensation reaction-type organopolysiloxanes and cured bodies of addition reaction-type organopolysiloxanes. Therefore, the silicone rubber lump is preferably a ground material of a cured body of a condensation reaction-type organopolysiloxane or a ground material of a cured body of an addition reaction-type organopolysiloxane, and more preferably a ground material of a cured body of an addition reaction-type organopolysiloxane.

The size of the silicone rubber lump is not especially limited, and the silicone rubber lump in a dispersed state in a cured body has an average particle diameter of preferably 50 $\mu$m or smaller, and more preferably 5 to 20 $\mu$m. The average particle diameter can be calculated by observing a cured body of the silicone rubber composition containing the silicone rubber lump by scanning electron microscopic observation (SEM observation) in a magnification of about 200x, measuring long diameter of 50 lumpy granules, and averaging the values to obtain an arithmetic average.

A ground material of a silicone rubber that has once manufactured is thus used as the silicone rubber lump in the silicone composition according to the present invention, and accordingly, the silicone rubber can be effectively reutilized.

The silicone rubber lump (B) preferably contains at least one filler of thermally conductive fillers and electroconductive fillers. The silicone rubber lump containing the filler is manufactured by grinding a silicone rubber, but the silicone rubber is easy to grind since it contains the filler.

The silicone rubber lump containing a thermally conductive filler is prepared by using a thermally conductive silicone rubber as a starting material, and accordingly, sheets made of a thermally conductive silicone rubber, burrs generated in manufacture of the sheets, and the like can effectively be reutilized as the silicone rubber lump in the present invention.

The kind of the thermally conductive filler contained in the silicone rubber lump (B) is not especially limited as long as it is a thermally conductive filler used for usual heat dissipation sheets. Examples thereof includes oxides such as aluminum oxide, magnesium oxide and zinc oxide, nitrides such as boron nitride and aluminum nitride, and metal hydroxides such as aluminum hydroxide and magnesium hydroxide. The thermally conductive fillers may be used singly or in combinations of two or more.

A cured body of the silicone composition according to the present invention when it contains the silicone rubber lump (B) containing the thermally conductive filler can be used as thermally conductive sheets and the like since the silicone composition has thermal conductivity. Furthermore, the dispersibility of the silicone rubber lump in the matrix resin is good in the present invention as described above, and therefore, there can be obtained a cured body having a low variation in the thermal conductivity.

The silicone rubber lump (B) containing an electroconductive filler is prepared by using an electroconductive silicone rubber as a starting material, and accordingly, sheets made of an electroconductive silicone rubber, burrs generated in manufacture of the sheets, and the like can effectively be reutilized as the silicone rubber lump in the present invention.

The kind of the electroconductive filler contained in the silicone rubber lump (B) is not especially limited as long as it is an electroconductive filler used for usual electroconductive sheets and the like. Examples of the electroconductive filler include metals such as gold, silver, copper, aluminum and nickel, carbon blacks such as furnace black, channel black, thermal black, acetylene black and Ketjen black, and graphite and graphene. The electroconductive fillers may be used singly or in combinations of two or more.

A cured body of the silicone composition according to the present invention when it contains the silicone rubber lump containing the electroconductive filler can be used as electroconductive sheets and the like since the silicone composition has electric conductivity. Furthermore, the dispersibility of the silicone rubber lump in the matrix resin is good in the present invention as described above, and therefore, there can be obtained a cured body having a low variation in the electric conductivity.

The shape of the above-mentioned thermally conductive filler and electroconductive filler is not especially limited, and for example, spherical ones, crushed ones, fibrous ones and flake ones can be used. Among the fillers of these shapes, spherical one is preferably used in view of enhancing the filling property.

The content of the filler in the silicone rubber lump (B) is not especially limited, but is preferably 30 to 90% by volume and more preferably 50 to 80% by volume, in view of ease in grinding when a silicone rubber is ground to manufacture the silicone rubber lump and the dispersibility thereof in the matrix resin.

The hardness of the silicone rubber lump (B) is preferably 90 or lower, more preferably 40 or lower and still more preferably 20 or lower, in terms of E hardness. There is a tendency that the silicone rubber lump having a hardness in the above range in the matrix resin has good dispersibility. The E hardness is a value measured by a type E durometer according to JIS K6253. In particular, when the silicone rubber lump (B) has a hardness of 40 or lower in terms of E hardness, it is easy for the silicone rubber lump (B) to be largely swollen with the liquid compound, and the dispersibility of the silicone rubber lump (B) is thus greatly improved, leading to obtaining a cured body having a remarkably low variation in physical properties such as mechanical strength among positions in the cured body.

A smaller difference is preferable between the E hardness of the silicone rubber lump (B) and the E hardness of the above-mentioned liquid silicone compound (A) after being cured. The absolute value of the difference between the E hardnesses of the both is preferably 50 or smaller, more preferably 20 or smaller and still more preferably 10 or smaller. When the difference between the E hardnesses of the both is small, the dispersibility of the silicone rubber lump (B) is improved, leading to reduction in the variation in physical properties such as mechanical strength among positions in a cured body.

The content of the silicone rubber lump in the silicone composition is not especially limited, and is preferably 50 to 90% by volume and more preferably 70 to 85% by volume.

<(C) Liquid compound>

The silicone composition according to the present invention comprises the liquid compound (C) to swell the silicone rubber lump (B). The liquid compound (C) is not especially limited as long as it is a compound capable of swelling the silicone rubber lump (B). Here, a compound capable of swelling means a compound which can be incorporated in the inside of the silicone rubber lump (B) when added to the silicone rubber lump (B) to thereby increase the volume of the silicone rubber lump (B).

The liquid compound (C) is preferably at least one selected from the group consisting of alkoxysilane compounds, alkoxysiloxane compounds, aliphatic hydrocarbon solvents, aromatic solvents, silicone oils and silazanes. Among these, more preferable are at least one selected from the group consisting of alkoxysilane compounds, alkoxysiloxane compounds, silicone oils and silazanes, because these are good in the affinity for the silicone rubber lump (B) to easily swell the silicone rubber lump (B), and especially preferable are alkoxysilane compounds.

When an alkoxysilane compound is used as the liquid compound (C), the dispersibility of the silicone rubber lump (B) is especially excellent and the mechanical properties such as the bending strength of a cured body are improved. Further in the case where the silicone rubber lump (B) contains the thermally conductive filler, use of the alkoxysilane compound as the liquid compound (C) easily improves the thermal conductivity of a cured body. The compounds as the liquid compound (C) may be used singly or in combinations of two or more.

Here, "liquid" means being liquid at 23°C and 1 atm.

The alkoxysilane compound to be used as the liquid compound (C) is a compound having a structure in which 1 to 3 bonds out of 4 bonds of a silicon atom (Si) are each bonded with an alkoxy group and the other bonds are each bonded with an organic substituent. Examples of the alkoxy group of the alkoxysilane compound include a methoxy group, an ethoxy group, a protoxy group, a butoxy group, a pentoxy group and a hexatoxy group. The alkoxysilane compound may be contained as a dimer in the silicone composition.

Among the alkoxysilane compounds, an alkoxysilane compound having a methoxy group or an ethoxy group is preferable in view of availability. The number of the alkoxy group the alkoxysilane compound has is preferably 3, because the silicone rubber lump (B) is easily swelled with such an alkoxysilane compound. The alkoxysilane compound is more preferably at least one selected from trimethoxysilane compounds and triethoxysilane compounds.

Examples of a functional group contained in the organic substituent of the alkoxysilane compound include an acryloyl group, alkyl groups, a carboxyl group, a vinyl group, a methacryl group, aromatic groups, an amino group, an isocyanate group, an isocyanurate group, an epoxy group, a hydroxyl group and a mercapto group. Here, in the case of using an addition reaction-type organopolysiloxane containing a platinum catalyst as the liquid silicone compound (A), it is preferable to select and use an alkoxysilane compound hardly affecting the curing reaction of the organopolysiloxane. Specifically, in the case of using an addition reaction-type organopolysiloxane containing a platinum catalyst, it is preferable that the organic substituent of the alkoxysilane compound should not contain an amino group, an isocyanate group, an isocyanurate group, a hydroxyl group or a mercapto group.

In view of enhancing the dispersibility of the silicone rubber lump (B), the alkoxysilane compound is preferably an alkylalkoxysilane compound having an alkyl group bonded to a silicon atom, that is, an alkoxysiloxane compound having an alkyl group as the organic substituent (alkyl group-containing alkoxysiloxane compound). The number of carbon atoms of the alkyl group bonded to the silicon atom is preferably 4 or more. Further, the number of carbon atoms of the alkyl group bonded to the silicon atom is preferably 16 or less for the following reasons: the viscosity of the alkoxysilane compound itself is relatively low and the viscosity of the silicone composition is low.

Examples of the alkyl group-containing alkoxysilane compound include methyltrimethoxysilane, dimethyldimethoxysilane, trimethylmethoxy silane, methyltriethoxysilane, dimethyldiethoxysilane, ethyltrimethoxysilane, n-propyltrimethoxysilane, n-propyltriethoxysilane, isobutyltrimethoxysilane, isobutyltriethoxysilane, n-hexyltrimethoxysilane, n-hexyltriethoxysilane, cyclohexylmethyldimethoxysilane, n-octyltriethoxysilane and n-decyltrimethoxysilane. Among the alkyl group-containing alkoxysilane compounds, n-decyltrimethoxysilane is especially preferable in view of obtaining good dispersibility of the silicone rubber lump (B).

The alkoxysiloxane compound to be used as the liquid compound (C) has two or more siloxane bonds and has a structure in which an alkoxy group is bonded to at least one silicon atom. The alkoxysiloxane compound has also a structure in which an organic substituent is bonded to at least one silicon atom among silicon atoms constituting siloxane bonds.

Examples of the alkoxy group and the organic substituent of the alkoxysiloxane compound include those exemplified for the description of the alkoxysilane compound. The alkoxysiloxane compound can enhance the dispersibility of the silicone rubber lump (B) since it has an alkoxy group similarly to the alkoxysilane compound.

The alkoxysiloxane compounds can be used singly or in combinations of two or more thereof. Examples of the alkoxysiloxane compound include methylmethoxysiloxane oligomer, methylphenylmethoxysiloxane oligomer, methylepoxymethoxysiloxane oligomer, methylmercaptomethoxysiloxane oligomer and methylacryloylmethoxysiloxane oligomer.

The aliphatic hydrocarbon solvents to be used as the liquid compound (C), preferable are aliphatic hydrocarbon solvents having 12 to 19 carbon atoms, or liquid paraffin.

As the aliphatic hydrocarbon solvents having 12 to 19 carbon atoms, preferable are straight-chain or branched-chain saturated hydrocarbon solvents having 12 to 19 carbon atoms, and examples thereof include n-dodecane, isododecane, n-tridecane, isotridecane, n-tetradecane, isotetradecane, n-pentadecane, isopentadecane, n-hexadecane, isohexadecane, n-heptadecane, isoheptadecane, n-octadecane, isooctadecane, n-nonadecane and isononadecane. Among these, preferable are n-tetradecane, n-pentadecane and n-hexadecane.

The aromatic solvents to be used as the liquid compound (C) are preferably aromatic hydrocarbon solvents having 6 to 10 carbon atoms, and examples thereof include toluene, xylene, mesitylene, ethylbenzene, propylbenzene, butylbenzene and t-butylbenzene; and preferable are toluene, xylene and the like.

The silicone oils to be used as the liquid compound (C) include straight silicone oils and modified silicone oils.

The straight silicone oils include dimethylsilicone oil and methylphenylsilicone oil.

Examples of the modified silicone oils include polyether-modified silicone oils, aralkyl-modified silicone oils, fluoroalkyl-modified silicone oils, long-chain alkyl-modified silicone oils, higher fatty acid ester-modified silicone oils, higher fatty acid amide-modified silicone oils and phenyl-modified silicone oils.

Among the silicone oils to be used as the liquid compound (C), straight silicone oils are preferable in view of swelling the silicone rubber lump (B) to improve the dispersibility thereof in the matrix resin, and among these, dimethylsilicone oil is preferable.

The silazanes to be used as the liquid compound (C) include hexamethyldisilazane, diphenyltetramethyldisilazane, octamethyltrisilazane and hexamethylcyclotrisilazane. Among these, hexamethyldisilazane is preferable in view of swelling the silicone rubber lump (B) to improve the dispersibility thereof in the matrix resin.

Among the above (C) liquid compounds, preferable are liquid compounds having a solubility parameter (SP value) of 7 to 10.

The content of the liquid compound (C) in the silicone composition is not especially limited, and is for example, 1 to 50 parts by mass, preferably 2 to 30 parts by mass and more preferably 5 to 15 parts by mass, with respect to 100 parts by mass of the silicone rubber lump (B). When the liquid compound (C) and the silicone rubber lump (B) are kneaded, the content is preferably as described above, but the liquid compound (C) may be partially evaporated after the kneading.

The silicone composition according to the present invention may comprise (D) at least one filler selected from thermally conductive fillers and electroconductive fillers. Here, the filler (D) is not the above-mentioned filler contained in the silicone rubber lump (B), and is one to be blended in the silicone composition separately from for the silicone rubber lump (B).

When the silicone composition contains a thermally conductive filler as the filler (D), the thermal conductivity of a cured body is high and the cured body can thus be used as thermally conductive sheets and the like. Further, when the silicone composition contains an electroconductive filler as the filler (D), the electric conductivity of a cured body is high and the cured body can thus be used as electroconductive sheets and the like.

Examples of the kinds of the thermally conductive filler and electroconductive filler in the filler (D) are the same as described for the above-mentioned thermally conductive filler and electroconductive filler contained in the silicone rubber lump (B).

The content of the filler (D) in the silicone composition is not especially limited, and is, for example, preferably 20 to 80 parts by volume and more preferably 50 to 70 parts by volume, with respect to 100 parts by volume of the liquid silicone compound (A).

<Additives>

The silicone composition, can further contain additives, as required. Examples of the additives include reinforcing materials, colorants, heat resistance improvers, surfactants, dispersants, fire retardants, catalysts, curing retarders, antidegradants and plasticizers.

<Method for manufacturing the silicone composition>

A method for manufacturing the silicone composition according to the present invention, comprising (A) a liquid silicone compound, (B) a silicone rubber lump, and (C) a liquid compound to swell the silicone rubber lump (B), is not especially limited, but the manufacture method preferably comprises a step (1) of swelling the silicone rubber lump (B) with the liquid compound (C). Manufacturing the silicone composition by the manufacture method comprising the step (1) brings about good dispersibility of the silicone rubber lump (B) in a cured body of the silicone composition.

The silicone rubber lump (B) can be obtained by grinding a silicone rubber manufactured by a known method. A method of grinding is not especially limited, and a known grinder or mixer or the like may be used. There can be used, for example, a jaw crusher, a hammer crusher, a roll crusher, a screen crusher, a jet mill, a colloid mill, a roller mill, a vibration mill, or the like.

In the step of swelling the obtained (B) silicone rubber lump with the liquid compound (C), the silicone rubber lump (B) and the liquid compound (C) may be mixed. With regard to the amounts of the both to be blended in the mixing, the amount of the liquid compound (C) is for example, 1 to 50 parts by mass, preferably 2 to 30 parts by mass and more preferably 5 to 15 parts by mass, with respect to 100 parts by mass of the silicone rubber lump (B). The temperature in the mixing is preferably 20 to 40°C. Further, after the both are mixed, the mixture is preferably allowed to stand still for a certain time to cause the swelling of the silicone rubber lump (B) to be advanced. The standing-still time is preferably 0.5 to 24 hours.

By the above-mentioned step (1) of swelling the silicone rubber lump (B), a swollen silicone rubber lump is obtained.

After the step (1) is carried out, a step (2) of mixing the swollen silicone rubber lump with the liquid silicone compound (A) is preferably carried out. The mixing is preferably carried out by stirring using a vibratory mixer or the like. It is conceivable that by the step (2), the liquid silicone compound (A) enters the inside of the swollen silicone rubber lump (for example, the inside of a network structure in which molecular chains are crosslinked), and that the further stirring causes the swollen silicone rubber lump to be partially cut, for example, to thereby be micronized, consequently improving the dispersibility in a cured body.

With regard to the amount of the silicone rubber lump to be blended in the step (2), the content of the silicone rubber lump in the silicone composition is preferably 50 to 90% by volume and more preferably 70 to 85% by volume.

In the case where the liquid silicone compound (A) is a composition to be cured by mixing two components, the liquid silicone compound (A) is preferably added in a plural (for example, in two) portions and mixed with the swollen silicone rubber lump. For example, in the case of an addition reaction-type organopolysiloxane containing an alkenyl group-containing organopolysiloxane and a hydrogenorganopolysiloxane, the alkenyl group-containing organopolysiloxane and the hydrogenorganopolysiloxane are added in two or more portions in the step (2). For example, a liquid component containing the alkenyl group-containing organopolysiloxane may be added, followed by adding a liquid component containing the hydrogenorganopolysiloxane.

The method for manufacturing the silicone composition according to the present invention is not limited to a method comprising the above step (1) and step (2). For example, in the case of an addition reaction-type organopolysiloxane containing an alkenyl group-containing organopolysiloxane and a hydrogenorganopolysiloxane, a method may also be used in which the swelling step (1) is carried out in the presence of at least one of the alkenyl group-containing organopolysiloxane and the hydrogenorganopolysiloxane, and thereafter, the other of the alkenyl group-containing organopolysiloxane and the hydrogenorganopolysiloxane is blended.

In case of manufacturing the silicone composition containing the thermally conductive filler, the electroconductive filler, or the additives, these may be added in the step (1), may be added in the step (2), or may be added in an additional step other than the step (1) or the step (2).

(Cured body of the silicone composition)

The cured body of the silicone composition according to the present invention is manufactured by curing the silicone composition manufactured as described above, and specifically, can be obtained by heating the above silicone composition to crosslink the liquid silicone compound. The heating may be carried out, for example, at about 50 to 150°C. The heating time is, for example, about 10 min to 20 hours.

Applications of the cured body of the silicone composition are not especially limited, and the cured body can be used, for example, as protection films for electric parts and semiconductor materials. For example, in the case of the cured body of the silicone composition containing the thermally conductive filler, it can be used as thermally conductive sheets, which can be disposed between heat-generating elements and heat dissipation elements of electronic devices and used. Examples of the heat-generating elements include electronic elements, and examples of the heat dissipation elements include heat sinks and heat pipes. Further in the case where the cured body of the silicone composition contains the electroconductive filler, the cured body can be used as electroconductive sheets, electroconductive members such as wiring, and the like.

Examples

Hereinafter, the present invention will be described in detail by way of Examples, but the present invention is not any more limited to these Examples.

In the present Examples, the evaluation was carried out by the following methods.

[Thermal conductivity]

The thermal conductivity of a cured body of a silicone composition was measured by a method according to ASTM D5470-06 by using a thermal resistance measurement device.

(Measurement device)

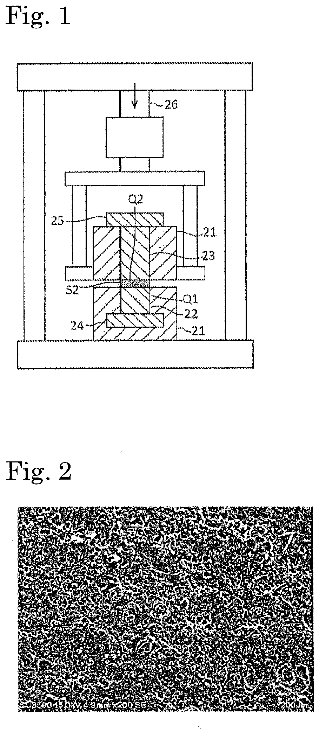

As shown in Fig. 1, a thermal resistance measurement device includes a first copper block 22 and a second copper block 23 each covered with a thermal insulator 21 on the side surface thereof. The first copper block 22 is disposed in the lower part of the thermal resistance measurement device, and the second copper block 23 is disposed above the first copper block 22. The upper surface of the first copper block 22 is a mounting surface Q1 on which a cured body (sample) S2 of a silicone composition is mounted, and the size of the mounting surface Q1 is 25.4 mm × 25.4 mm. The thermal resistance measurement device further includes a heater 24 to heat the lower surface of the first copper block 22 and a heat sink with a cooling fan, 25, to cool the upper surface of the second copper block 23. The thermal resistance measurement device further includes a cylinder 26 connected to the second copper block 23. The second copper block 23 is configured so as to compress the sample S2 mounted on the mounting surface Q1 of the first copper block 22 by pressing operation of the cylinder 26.

(Measurement)

The measurement of the thermal conductivity was carried out as follows. First, a sample S2 was applied to the mounting surface Q1 of the first copper block 22, and then compressed by the second copper block 23 so that the thickness of the sample S2 became 1.5 mm. Then, the squeezed-out sample was wiped up and the heater 24 was made to produce heat so that the temperature of the mounting surface Q1 of the first copper block 22 became 80°C. The state was kept for 15 minutes so that the temperature of the mounting surface Q1 of the first copper block 22 (temperature $\theta°_{j1}$) was steady at 80°C. Thereafter, the temperature of the lower surface Q2 (contact surface contacting with the sample S2) of the second copper block 23 (temperature $\theta°_{j0}$) was measured. Further, the quantity of heat generated (generated heat quantity Q) of the heater 24 at this time, and the exact thickness (thickness T) of the sample S2 were measured.

Further, the same measurement was carried out, except that the thickness was regulated to 1.0 mm and 0.5 mm. Values of the thermal resistance of the sample S2 in each thickness calculated from the following formula (2) were plotted on a graph in which the ordinate and the abscissa represented the thermal resistance and the thickness, respectively, and the thermal conductivity was determined from the gradient of the plot.

$$\text{Thermal conductivity} = (\theta^\circ_{j1} - \theta^\circ_{j0})/Q \cdots (2)$$

[Scanning electron microscopic observation (SEM observation)]

A cross section of a cured body of a silicone composition was observed using a scanning electron microscope ("SU3500", manufactured by Hitachi-High-Technologies Corp.) to check the dispersion state of a silicone rubber lump. Condition: an acceleration voltage of 15 kV, a magnification of 200 times

In the results of the scanning electron microscopic observation (SEM observation), the case where the dispersibility of a silicone rubber lump was excellent was graded as "A"; the case where the dispersibility was inferior to "A" but was good, as B"; and the case where the dispersibility was inferior with much aggregation observed, as "C".

[Bending test]

On a cured body (2 mm in thickness, 5 mm in width, 50 mm in length) of a silicone composition obtained in each of Examples and Comparative Example, a 180-degree bending test was carried out and it was visually checked whether or not cracks were generated on the bended portion (protruded portion).

A: no cracks were observed.
B: small cracks were observed, but no problem in use arose.
C: large cracks were observed and the cured body was broken.

[Each component]

<Starting materials (silicone rubbers) of silicone rubber lumps>

As starting materials for silicone rubber lumps, the following silicone rubbers 1 and 2 were used which were each obtained by curing an addition reaction-type organopolysiloxane containing an alkenyl group-containing organopolysiloxane and a hydrogenorganopolysiloxane.

Silicone rubber 1: having a thermal conductivity of 1.3 W/mK and an E hardness of 5; and containing 42% by volume of the organopolysiloxane cured material, and as thermally conductive fillers, 29% by volume of an aluminum hydroxide (crushed form, average particle diameter: 50 $\mu$m) and 29% by volume of an aluminum hydroxide (crushed form, average particle diameter: 10 $\mu$m).

Silicone rubber 2: having a thermal conductivity of 1.3 W/mK and an E hardness of 70; and containing 42% by volume of the organopolysiloxane cured material, and as thermally conductive fillers, 29% by volume of an aluminum hydroxide (crushed form, average particle diameter: 50 $\mu$m) and 29% by volume of an aluminum hydroxide (crushed form, average particle diameter: 10 $\mu$m).

<Liquid compounds to swell the silicone rubber lumps>

• n-decyltrimethoxysilane
• dimethylsilicone oil

<Liquid silicone compound>

An addition reaction-type dimethylpolysiloxane (two-component type composed of a component A and a component B; by mixing these, a reaction occurs between an alkenyl group-containing organopolysiloxane and a hydrogenorganopolysiloxane); having a hardness of 5 in terms of E hardness after being cured

<Thermally conductive filler>

Aluminum hydroxide (crushed form, average particle diameter: 10 $\mu$m)

(Example 1)

The silicone rubber 1 was placed in a chopper unit of "Blender Set MIH-MX201-WH", manufactured by Moa Store Co., Ltd., and ground at a speed of "1" for 5 minutes to thereby obtain a silicone rubber lump.

The silicone rubber lump and a liquid compound (n-decyltrimethoxysilane) were placed and mixed in a plastic container, and thereafter, the mixture was allowed to stand for 1 hour to thereby obtain a swollen silicone rubber lump.

The swollen silicone rubber lump and the component A of the liquid silicone compound were placed in a plastic container and stirred at a speed of "1" for 5 minutes using a blender unit of "Blender Set MIH-MX201-WH", manufactured by Moa Store Co., Ltd., to thereby obtain a liquid mixture (intermediate). Then, the liquid mixture (intermediate) and the component B of the liquid silicone compound were stirred for 4 minutes using a vibratory mixer to thereby obtain a silicone composition. Here, the amounts of the silicone rubber lump, the liquid compound and the liquid silicone compound were adjusted so that respective blend ratios were those indicated in Table 1.

The obtained silicone composition was applied to a release sheet to a thickness of 2 mm, and heated at 80°C for 15 hours to thereby obtain a sheet-shaped cured body of the silicone composition.

(Example 2)

A sheet-shape cured body of a silicone composition was obtained in the same manner as in Example 1, except for using dimethylsilicone oil as the liquid compound in place of n-decyltrimethoxysilane.

(Example 3)

A cured body of a silicone composition was obtained in the same manner as in Example 2, except for using the silicone rubber 2 in place of the silicone rubber 1.

(Example 4)

A cured body of a silicone composition was obtained in the same manner as in Example 1, except for altering the amount of the liquid silicone compound blended and further adding the thermally conductive filler.

(Comparative Example 1)

The silicone rubber 1 was placed in a chopper unit of "Blender Set MIH-MX201-WH", manufactured by Moa Store Co., Ltd., and ground at a speed of "1" for 5 minutes to thereby obtain a silicone rubber lump.

The silicone rubber lump and the component A of the liquid silicone compound were placed in a plastic container and stirred at a speed of "1" for 5 minutes using a blender unit of "Blender Set MIH-MX201-WH", manufactured by Moa Store Co., Ltd., to thereby obtain a liquid mixture (intermediate). Then, the liquid mixture (intermediate) and the component B of the liquid silicone compound were stirred for 4 minutes using a vibratory mixer to thereby obtain a silicone composition. Here, the amounts of the silicone rubber lump and the liquid silicone compound were adjusted so that respective blend ratios became those indicated in Table 1.

The obtained silicone composition was applied to a release sheet to a thickness of 2 mm, and heated at 80°C for 15 hours to thereby obtain a sheet-shaped cured body of the silicone composition.

Table 1

| | | | Example 1 | Example 2 | Example 3 | Example 4 | Comparative Example 1 |
|---|---|---|---|---|---|---|---|
| Silicone composition (parts by mass) | (A) Liquid silicone compound | Component A | 0.25 | 0.25 | 0.25 | 0.5 | 1 |
| | | Component B | 0.25 | 0.25 | 0.25 | 0.5 | 1 |
| | (B) Silicone rubber lump | Ground material of silicone rubber 1 | 15 | 15 | 0 | 15 | 15 |
| | | Ground material of silicone rubber 2 | 0 | 0 | 15 | 0 | 0 |
| | (C) Liquid compound to swell the lump | n-Decyltrimetoxysilane | 1.5 | 0 | 0 | 1.5 | 0 |
| | | Dimethylsilicone oil | 0 | 1.5 | 1.5 | 0 | 0 |
| | (D) Thermally conductive filler | Aluminum hydroxide | 0 | 0 | 0 | 1.5 | 0 |
| Content of liquid silicone compound (A) in silicone composition (% by volume) | | | 4.9 | 4.9 | 4.9 | 8.8 | 19.6 |
| Content of silicone rubber lump (B) in silicone composition (% by volume) | | | 80.4 | 80.4 | 80.4 | 72.5 | 80.4 |
| Content of liquid compound (C) in silicone composition (% by volume) | | | 14.7 | 14.7 | 14.7 | 13.2 | 0 |
| Content of thermally conductive filler (D) in silicone composition (% by volume) | | | 0 | 0 | 0 | 5.5 | 0 |
| Physical properties of cured body | SEM observation | | A | B | B | A | C |
| | Bending test | | A | B | B | A | C |
| | Thermal conductivity | W/mK | 0.95 | 0.89 | 0.90 | 1.1 | 0.92 |

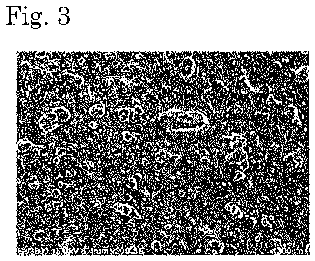

Fig. 2 shows a photograph by scanning electron microscopic observation of a cross section of the cured body obtained in Example 1. Fig. 3 shows a photograph by scanning electron microscopic observation of a cross section of the cured body obtained in Comparative Example 1. Viewing Fig. 3 (photograph of a cross section of the cured body of Comparative Example 1), protruded portions and flat portions are clearly distinguished from each other so that the cross section was nonuniform as a whole, and aggregates of the thermally conductive filler contained in the silicone rubber lump were locally observed. By contrast, viewing Fig. 2 (photograph of a cross section of the cured body of Example 1), no flat portions as in Fig. 3 were observed and it was clear that the silicone rubber lump was well dispersed in the matrix resin. Though the dispersibility of the silicone rubber lumps of Examples 2 and 3 was inferior to Example 1, the silicone rubber lump was better dispersed in Examples 2 and 3 than in Comparative Example 1. The dispersibility of the silicone rubber lump of Example 4 was equal to that of Example 1.

The results of the bending test in Examples 1 to 4 were better than that in Comparative Example 1. It is presumed that this resulted from the fact that the dispersibility of the silicone rubber lumps in the cured bodies of Examples 1 to 4 was better than that in Comparative Example 1. The cured bodies of Examples 1 and 4, which were prepared by using n-decyltrimethoxysilane as the liquid compound, were remarkably excellent in the dispersibility of the silicone rubber lump and hence, achieved the best results of the bending test and also the good thermal conductivities. The cured body of Example 4, which further contained the thermally conductive filler (D) as compared with the cured body of Example 1, consequently gave a higher thermal conductivity than the cured body of Example 1.

Reference Signs List

| | |
|---|---|
| 21 | THERMAL INSULATOR |
| 22 | FIRST COPPER BLOCK |
| 23 | SECOND COPPER BLOCK |
| 24 | HEATER |
| 25 | HEAT SINK |
| 26 | CYLINDER |
| Q1 | MOUNTING SURFACE |
| Q2 | LOWER SURFACE OF SECOND COPPER BLOCK |
| S2 | SAMPLE |

**Claims**

1. A silicone composition, comprising:

   (A) a liquid silicone compound;
   (B) a silicone rubber lump; and
   (C) a liquid compound to swell the silicone rubber lump (B).

2. The silicone composition according to claim 1, wherein the liquid silicone compound (A) is an addition reaction-type organopolysiloxane.

3. The silicone composition according to claim 1 or 2, wherein the liquid compound (C) is at least one selected from the group consisting of alkoxysilane compounds, alkoxysiloxane compounds, aliphatic hydrocarbon solvents, aromatic solvents, silicone oils and silazanes.

4. The silicone composition according to any one of claims 1 to 3, wherein the liquid compound (C) is an alkylalkoxysilane compound having an alkyl group having 4 or more carbon atoms bonded to a silicon atom.

5. The silicone composition according to any one of claims 1 to 4, wherein the silicone rubber lump (B) comprises at least one filler selected from thermally conductive fillers and electroconductive fillers.

6. The silicone composition according to any one of claims 1 to 5, wherein the silicone rubber lump (B) contained is swollen with the liquid compound (C).

7. The silicone composition according to any one of claims 1 to 6, further comprising (D) at least one filler selected from thermally conductive fillers and electroconductive fillers.

8. A cured body of a silicone composition according to any one of claims 1 to 7.

9. A method for manufacturing a silicone composition comprising (A) a liquid silicone compound, (B) a silicone rubber lump and (C) a liquid compound to swell the silicone rubber lump (B), the method comprising a step (1) of swelling the silicone rubber lump (B) with the liquid compound (C).

10. The method for manufacturing a silicone composition according to claim 9, comprising

the step (1) of swelling the silicone rubber lump (B) with the liquid compound (C), and
a step (2) of mixing the swollen silicone rubber lump with the liquid silicone compound (A).

11. A method for manufacturing a cured body of a silicone composition, the method comprising manufacturing the silicone composition by the method according to claim 9 or 10 and then curing the silicone composition.

Fig. 1

Fig. 2

Fig. 3

## INTERNATIONAL SEARCH REPORT

| | International application No. |
|---|---|
| | PCT/JP2021/013422 |

### A. CLASSIFICATION OF SUBJECT MATTER
Int. Cl. C08K5/5415(2006.01)i, C08L19/00(2006.01)i, C08L83/07(2006.01)i, C08K3/013(2018.01)i
FI: C08L19/00, C08L83/07, C08K5/5415, C08K3/013
According to International Patent Classification (IPC) or to both national classification and IPC

### B. FIELDS SEARCHED

Minimum documentation searched (classification system followed by classification symbols)
Int. Cl. C08K5/5415, C08L19/00, C08L83/07, C08K3/013

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)
CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 2002-256078 A (HOKURIKU BIRU BOSETSU KK) 11 September 2002, claims, paragraphs [0011], [0014]-[0020], [0025], [0029], [0036], [0043], [0044], [0047], [0048], [0057], examples, fig. 1-8 | 1-11 |
| A | JP 2019-14113 A (SHIN-ETSU CHEMICAL CO., LTD.) 31 January 2019 | 1-11 |
| A | JP 2005-145881 A (SHISEIDO CO., LTD.) 09 June 2005 | 1-11 |
| A | JP 2009-40807 A (SHIN-ETSU CHEMICAL CO., LTD.) 26 February 2009 | 1-11 |
| A | JP 2017-101171 A (SHIN-ETSU CHEMICAL CO., LTD.) 08 June 2017 | 1-11 |

☒ Further documents are listed in the continuation of Box C.   ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 14.05.2021 | 25.05.2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| | International application No. |
|---|---|
| | PCT/JP2021/013422 |

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2019/150944 A1 (SEKISUI POLYMATECH CO., LTD.) 08 August 2019 | 1-11 |

Form PCT/ISA/210 (continuation of second sheet) (January 2015)

INTERNATIONAL SEARCH REPORT

Information on patent family members

International application No.

PCT/JP2021/013422

| Patent Documents referred to in the Report | Publication Date | Patent Family | Publication Date |
|---|---|---|---|
| JP 2002-256078 A | 11.09.2002 | JP 2003-201348 A<br>WO 2003/104328 A1 | |
| JP 2019-14113 A | 31.01.2019 | (Family: none) | |
| JP 2005-145881 A | 09.06.2005 | (Family: none) | |
| JP 2009-40807 A | 26.02.2009 | (Family: none) | |
| JP 2017-101171 A | 08.06.2017 | (Family: none) | |
| WO 2019/150944 A1 | 08.08.2019 | CN 111315827 A | |

Form PCT/ISA/210 (patent family annex) (January 2015)

**EP 4 130 132 A1**

**REFERENCES CITED IN THE DESCRIPTION**

**Patent documents cited in the description**

- JP 2004363272 A